# EUROPEAN PATENT APPLICATION

(11) **EP 2 645 666 A1**
(43) Date of publication of application: **02.10.2013**
(21) Application number: 12161536.3
(22) Date of filing: 27.03.2012
(51) Int. Cl.: H04L 29/06, H04W 12/02, H04L 29/08

(54) **Method and capability manager for supporting provision of capabilities**

(71) Applicant: Telefonaktiebolaget LM Ericsson (publ), 164 83 Stockholm (SE)
(72) Inventor: Lidin, Jan, 141 71 Segeltorp (SE); Gjärdman, Jan, 123 52 Farsta (SE); Klein, Mikael, 141 69 Huddinge (SE)
(74) Representative: Strandin, Heléne

(57) **Abstract**

A method and capability manager (304) for supporting provision of capabilities of a first user terminal (300) to a second user terminal (302). Filtering rules have been pre-configured in the capability manager for the first user terminal to control exposure of capabilities. When the capability manager receives a capability message issued by the first user terminal, filtering rules (304a) are applied on the capabilities in the capability message, to modify the capability message by omitting at least one of the capabilities based on the filtering rules. The modified capability message is then forwarded towards the second user terminal. Thereby, options for communication will be indicated at the second terminal in accordance with the capabilities in the modified capability message, i.e. in a way that can be controlled by the user.

## Description

### Technical field

The present disclosure relates generally to a method and a capability manager for supporting provision of capabilities between two user terminals.

### Background

In modern user terminals for communication, there are typically multiple options available for communication and usage of services in a communication network. For example, a user terminal may be capable of supporting several different types of communication such as voice calls, video telephony, messaging based on Short Message Service (SMS) and Multimedia Message Service (MMS), text chats, file sharing, video sharing, online games, and also different encoding schemes and protocols, to mention a few illustrative examples. In this description, the term "capabilities" basically refers to such communication types, encoding schemes and protocols.

A network architecture called "IP Multimedia Subsystem" (IMS) has been developed to enable such differentiated services and sessions for user terminals connected to different access networks. The signalling protocol "SIP" (Session Initiation Protocol) can further be used for initiating and controlling communication sessions between different entities, as controlled by specific session control nodes in the IMS network, sometimes referred to as Call Session Control Function (CSCF) nodes. IMS also allows a user to have more than one terminal that can be addressed by the same identity, typically a telephone number.

There is thus a mixture of different user terminals in use today, having more or less differentiated capabilities, and when two user terminals shall execute some communication with each other, it is a common practice that they compare their capabilities first in order to know which type of communication is available for these two particular terminals. The communication type to use must be supported by both terminals, otherwise it cannot be used.

In the following description, the term "user terminal" is used to represent any terminal, user equipment, device, etc. which is capable of communication with an opposite entity such as another user terminal over a communications network. Some non-limiting examples of user terminals that can be used in this context include mobile phones, smartphones, laptop computers, tablets, television units, media players, and game consoles. Each of these terminal categories includes in turn a myriad of different brands and models with different functions and communication possibilities. It can thus be readily understood that the above provision of capabilities is necessary to find out what options are available.

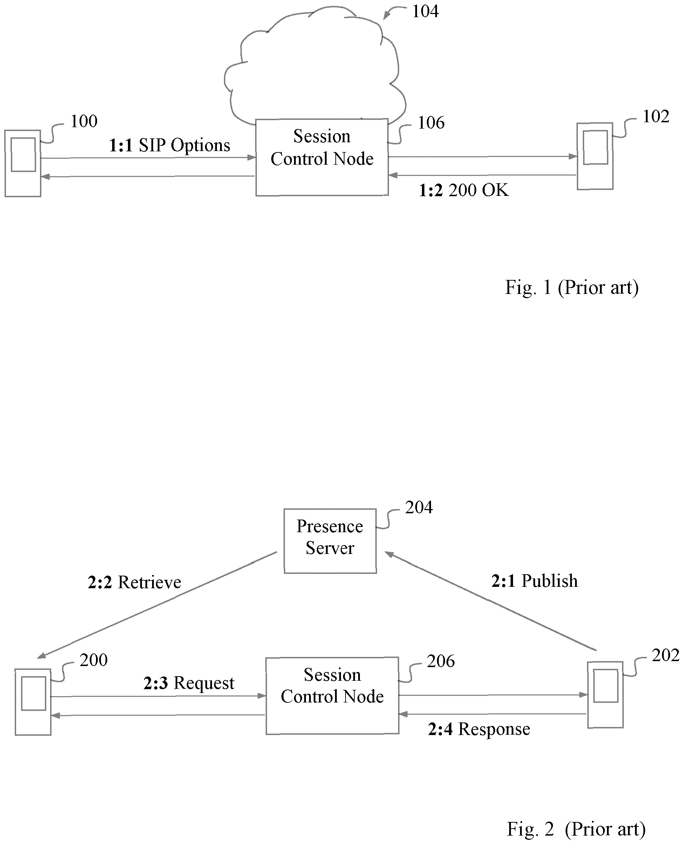

One existing mechanism for exchanging capabilities between entities is the so-called "SIP Options" method, which is schematically illustrated in Fig. 1. In this example, an originating user terminal 100 sends a SIP Options message towards a terminating user terminal 102, in an **action 1:1,** which message is routed over a session control node 106 in a network 104 for communication services. For example, the network 104 may be an IMS network and the session control node 106 may be a CSCF node comprised therein. The SIP Options message may be triggered in terminal 100 when a user dials the number of terminal 102 in preparation of a forthcoming session.

In particular, the SIP Options message from terminal 100 may include the capabilities of terminal 100, e.g. presented basically in the form of a list or record indicating which communication types the terminal 100 is capable of using. The opposite user terminal 102 conventionally responds by returning a so-called "200 OK" message to terminal 100, in an **action 1:2,** which typically always includes the capabilities of terminal 102 indicating which communication types the terminal 102 is capable of using. Thereby, the capabilities of the terminals 100, 102 have been exchanged and each terminal can determine which communication types are possible to use, i.e. those supported by both terminals. The capabilities of either terminal are thus exposed in this way at the opposite side and the available communication options can also be displayed on the terminals 100, 102, e.g. by showing or lightening corresponding icons or the like on the screen, such that their respective users can easily see which options are available before selecting and activating a communication type to use.

Another known mechanism, schematically illustrated in Fig. 2, is to exchange capabilities between two user terminals 200 and 202 by means of a presence service. In this example, the capabilities of terminal 202 are first published in a presence server 204, as illustrated in an **action 2:1.** The other terminal 200 may do the same, although not shown here for simplicity. The terminal 200 may subscribe to the capability information of terminal 202 and is therefore able to obtain the published capabilities of terminal 202, in another **action 2:2,** e.g. by fetching them from the presence server 204 or by receiving a notification therefrom. Using common presence terminology, terminal 202 acts as a "presentity" while terminal 200 acts as a "watcher", and the other way round is of course also possible.

In this case, it is not necessary to exchange capabilities in specific request and response messages between the terminals 200, 202, as in the above SIP Option method. Once retrieved, the capabilities of terminal 202 are known and used by terminal 200 to determine which types of communication are possible to use, and corresponding icons or the like may be displayed on the screen of terminal 200 indicating to its user which options are available. The user of terminal 200 can thus select and activate an available communication type, and a session request or the like is then issued to terminal 202 over a session control node 206, in an **action 2:3.** Terminal 202 will then respond accordingly to the session request in another shown **action 2:4.**

However, there are some drawbacks associated with the above procedures. A user may not be willing to expose his/her terminal(s) for starting, e.g., a video call or a text chat with anybody, depending on the current situation and/or depending on who is calling which could be a totally unknown person. One possibility often used to avoid unwanted calls is to block the terminal altogether from incoming calls, which can also be done selectively e.g. using so-called "black lists" or "white lists". Still, when using the SIP Options method of Fig. 1, the capabilities of one or more terminals associated with an identity such as a called number are automatically exposed at the opposite calling terminal in a way that cannot be controlled, which can be perceived by the called user as an intrusion of privacy. For example, the user may have a precious terminal that he/she does not wish to expose to anybody or show that this terminal is currently active. It is possible for an illicit party to gain knowledge of the characteristics and current state of a user's terminals and their locations simply by making capability requests according to the SIP Option method, e.g. for planning some malicious attack.

Even if the presence method of Fig. 2 provides some flexibility in that the terminal user can select which capabilities to expose by publication, this method is deemed somewhat taxing and costly by requiring establishment of a presence service. Further, the published capability information may be out of date or misleading, e.g. if the capabilities have not been updated or properly published in the presence server by the user as required, or if the terminal is currently in a situation which is not suitable for some of the published communication types such as when a mobile terminal is present in an area with very limited bandwidth, or when the user's device is simply turned off or otherwise unavailable for one or more communication types.

### Summary

It is an object of the invention to address at least some of the problems and issues outlined above, and to enable a terminal user to control whether the capabilities of his/her user terminal and corresponding options for communication will be exposed at an opposite user terminal. It is possible to achieve these objects and others by using a method and a capability manager as defined in the attached independent claims.

According to one aspect, a method is provided in a capability manager for supporting provision of capabilities of a first user terminal to a second user terminal. In this method, the capability manager receives a capability message issued by the first user terminal and directed to the second user terminal. The received capability message comprising capabilities of the first user terminal. Filtering rules, which have been pre-configured in the capability manager for the first user terminal to control exposure of the capabilities, are then applied on the capabilities in the capability message. The capability manager then modifies the capability message by omitting at least one of the capabilities based on the filtering rules, and forwards the modified capability message towards the second user terminal. Thereby, only the capabilities left in the modified capability message, if any, can be exposed at the second user terminal if they correspond to capabilities of the second user terminal.

According to another aspect, a capability manager is configured to support provision of capabilities of a first user terminal to a second user terminal. The capability manager comprises a receiving unit adapted to receive a capability message issued by the first user terminal and directed to the second user terminal, and the received capability message comprises capabilities of the first user terminal. The capability manager also comprises a logic unit adapted to apply filtering rules on the capabilities in the capability message, wherein the filtering rules have been pre-configured for the first user terminal. The logic unit is further adapted to modify the capability message by omitting at least one of the capabilities based on the filtering rules. The capability manager also comprises a forwarding unit adapted to forward the modified message towards the second user terminal.

When the above method and capability manager are implemented and used, the user of the first user terminal is able to control the exposure of terminal capabilities and corresponding options for communication at any opposite user terminal receiving the capability message, by pre-configuring the filtering rules in any desired manner in the capability manager. For example, if the user does not want to expose a particular capability and corresponding type of communication depending on the situation, he/she can configure the filtering rules such that this capability will be omitted from the capability message when this situation occurs.

The above method and capability manager may be configured and implemented according to different optional embodiments which are possible to select and combine in any suitable manner depending on implementation. In some possible embodiments, the capability message could be a capability request sent to the second user terminal such as a SIP Options message, or a response to a capability request received from the second user terminal such as a 200 OK message.

In further possible embodiments, the filtering rules may pertain to at least one of: identity of a user of the second user terminal, identity of the first user terminal, current status or activity of the first user terminal and its user, current geographical location of the first user terminal, time or day, and type of service. Further, the capability manager may be implemented in a communication services network such that its features and functions are put into practice at a single central location. In that case, the filtering rules could be configurable by the first terminal user by using any of: a client in the first user terminal, a downloadable application, and an interactive web interface. In the above network implementation, the capability manager may be connected to a session control node, e.g. a CSCF node of a SIP network, which handles communication between the first and second user devices in the communication services network. The session control node is thus responsible for receiving and routing the capability message in the network. Alternatively, the capability manager may be implemented in the first user terminal such that no network implemented capability manager is needed.

The filtering rules may be employed by means of an existing function of Presence Authorization Rules or Mobile Multimedia Telephony (MMTel) service.

Further possible features and benefits of this solution will become apparent from the detailed description below.

### Brief description of drawings

The solution will now be described in more detail by means of exemplary embodiments and with reference to the accompanying drawings, in which:

Fig. 1 is a communication scenario illustrating the SIP Options method for provision of capabilities, according to the prior art.

Fig. 2 is a communication scenario illustrating the presence service method for provision of capabilities, according to the prior art.

Fig 3 is a communication scenario illustrating how capabilities can be provided from an originating user terminal using a capability manager in a communication services network, according to some possible embodiments.

Fig 4 is a communication scenario illustrating how capabilities can be provided from a terminating user terminal using the capability manager of Fig. 3, according to some possible embodiments.

Fig. 5 is a flow chart illustrating a procedure in a capability manager, according to further possible embodiments.

Fig 6 is a communication scenario illustrating how capabilities can be provided from a user terminal using a capability manager in the user terminal, according to some possible embodiments.

Fig. 7 is a block diagram illustrating a capability manager in more detail, according to further possible embodiments.

### Detailed description

Briefly described, a solution is provided to enable a user of a first user device to control the exposure of capabilities to a second user device by configuring filtering rules in a capability manager. When the first user device issues a capability message directed to a second user device and containing a more or less complete set of capabilities, e.g. using the SIP Options method, the message is routed over the capability manager which applies the previously configured filtering rules and modifies the capability message by omitting at least one of the capabilities based on the filtering rules. Thereby, the modified capability message will contain a reduced set of capabilities when forwarded to the second user device. The filtering rules can be pre-configured in any manner by the user to filter out one or more capabilities depending on the situation, which will be described in more detail below. It is also possible that the filtering rules could dictate that no capabilities should be left in the message at all.

In this description, the term "capability message" is used to represent any message sent from a first user terminal to another communication entity, such as another user terminal like in the examples below, which message contains, at least when sent from the first terminal, information on capabilities of the first user terminal. Some examples of a capability message include the above-described messages SIP Options and 200 OK, although the solution is not limited to any particular capability messages. By configuring the filtering rules in the capability manager, the terminal user is able to control if, how and when his/her terminal's capabilities will be exposed in any opposite communication entities. It is an advantage that the user is thereby able to pre-configure such filtering rules to obtain tailored and personalized exposure of terminal capabilities in opposite terminals and entities in a relatively easy and reliable way. In this context, exposure of terminal capabilities is typically done by displaying corresponding options for communication, i.e. the available types of communication such as voice, video, chat, messaging, file transfer, etc., on the opposite terminal's screen.

The pre-configured filtering rules may pertain to the current time or day, or to the type of service such that certain types of services should be exposed but not others depending on the situation. According to other possible examples, the filtering rules may pertain to the identity of a user of the second user terminal. For example, the filtering rules may be configured such that the option of a voice call should be exposed to any opposite party while the option of a video call, a text chat, etc. should be exposed only to a set of known parties but not to other e.g. unknown parties.

In another example, the configured filtering rules may pertain to the identity of the first user terminal. If the first user owns more than one terminal and has configured a set of filtering rules for these terminals, the filtering rules may be defined to dictate that one set of one or more capabilities should be omitted from the capability message when using one terminal while another set of capabilities should be omitted when using another terminal. For example, the user may not want to reveal all the advanced possibilities of communication that a particular lavish terminal might have, e.g. to a potentially malicious caller.

In yet another example, the configured filtering rules may pertain to a current status or activity of the first user terminal and its user, such as engaged in a session, on hold, sleeping, in meeting, driving a vehicle, and so forth. The configured filtering rules may also refer to current geographical location of the first user terminal. For example, the option of a video call may be omitted from the capability message when located at work or in an area not covered by the user's home network. In general, the filtering rules may be configured so as to pertain to any of the above factors, or any combination thereof.

The capability manager described herein may be implemented in a communication services network such as an IMS network, or in the first user terminal, which will be described in more detail below. Further, the filtering rules may be employed in practice by means of an existing function of the known Presence Authorization Rules or a known Mobile Multimedia Telephony (MMTel) service.

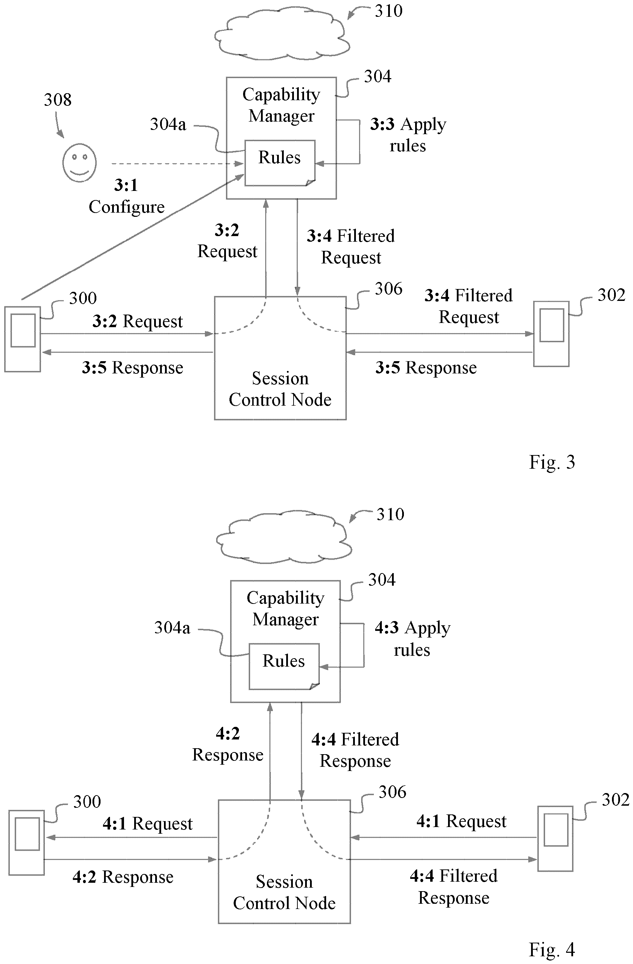

Some examples of how the solution may be used in practice when the capability manager is implemented in a communication services network 310, will now be described with reference to Figs 3 and 4. In Fig. 3, a first user terminal 300 will exchange capabilities with another second user terminal 302, which capability exchange is controlled by means of a capability manager 304 connected to a session control node 306, e.g. a CSCF node, handling a connection between terminals 300 and 302 in the network 310. The session control node is thus responsible for receiving and routing the capability message in the network. Before that, a first **action 3:1** schematically illustrates that filtering rules 304a are pre-configured in the capability manager 304 by the user to control exposure of terminal capabilities. This configuration could be executed from a client or the like in the first user terminal, as indicated by a full arrow, or from any computer by means of a downloadable application or an interactive web interface operated by the user 308, as indicated by a dashed arrow. In either case, the filtering rules 304a have now been pre-configured in the capability manager 304.

A next **action 3:2** illustrates that the user has made some input command, such as entering a telephone number, which triggers the terminal 300 to issue a capability request, thus being a capability message such as the above-described SIP Options message, directed to the opposite user terminal 302. When this message reaches the session control node 306, it is routed to the capability manager 304 as shown by an arrow directed thereto. When receiving the capability request, the capability manager 304 applies the pre-configured filtering rules 304a, in an **action 3:3,** and modifies the message by omitting at least one of the capabilities from the message, based on the filtering rules. As mentioned above, it is possible that all capabilities are omitted from the message depending on the filtering rules and the current situation. It may also happen in some cases that the filtering rules allow all capabilities to be exposed at the opposite terminal, i.e. no capability needs to be omitted according to the rules, which is however outside the scope of this example.

A next **action 3:4** illustrates that the modified capability message is forwarded as a "filtered request" from the capability manager 304 and routed by the session control node 306 to the second user terminal 302. Depending on what capabilities the second terminal 302 itself has, it will expose options for communication according to those capabilities in the received message which are also valid for the second terminal 302. In this context, it may happen that none of the first terminal's capabilities present in the capability message, if any, are common with those of the second terminal 302, and in that case no options for communication will be exposed at all.

According to regular procedures, the second terminal 302 also duly sends a response to the capability message received from terminal 300, as shown in an **action 3:5,** which is routed by the session control node 306 to terminal 300. The response in this action is typically a 200 OK message which always should contain the capabilities of the sending terminal 302, and it may likewise be processed by the capability manager 304 in a similar manner, not shown here for simplicity.

Fig. 4 illustrates the same terminals and network nodes, that is the first and second user terminals 300 and 302, the capability manager 304 in which the filtering rules 304a have been pre-configured by the first user, and the session control node 306 of network 310. In the example of Fig. 4, it is the second terminal that sends a capability request, as of action 4:1, which reaches the first terminal 300 as indicated. This capability request may contain capabilities of the second terminal, and may be modified in the way described above or unmodified without applying any filtering rules. It is also a possibility that the capability request does not contain any capabilities of the second terminal. In any case, this capability request triggers the first terminal 300 to send a response thereto, in an **action 4:2,** which is routed by the session control node 306 to the capability manager 304. The response of action 4:2 is another capability message which duly contains the capabilities of terminal 300, and the response message could be the above-mentioned 200 OK message, but not limited thereto.

When receiving the response message, the capability manager 304 applies the pre-configured filtering rules 304a, in an **action 4:3,** and modifies the message by omitting at least one of the capabilities from the message, based on the filtering rules, which is similar to the operation in action 3:3 above. A next **action 4:4** illustrates that the modified response message is forwarded as a "filtered response" from the capability manager 304, as routed by the session control node 306, to the second user terminal 302.

By using the solution exemplified by the above scenarios of Figs 3 and 4, the user of the first user terminal 300 can control the exposure of terminal capabilities and corresponding options for communication on any opposite user terminal by pre-configuring the filtering rules in the capability manager.

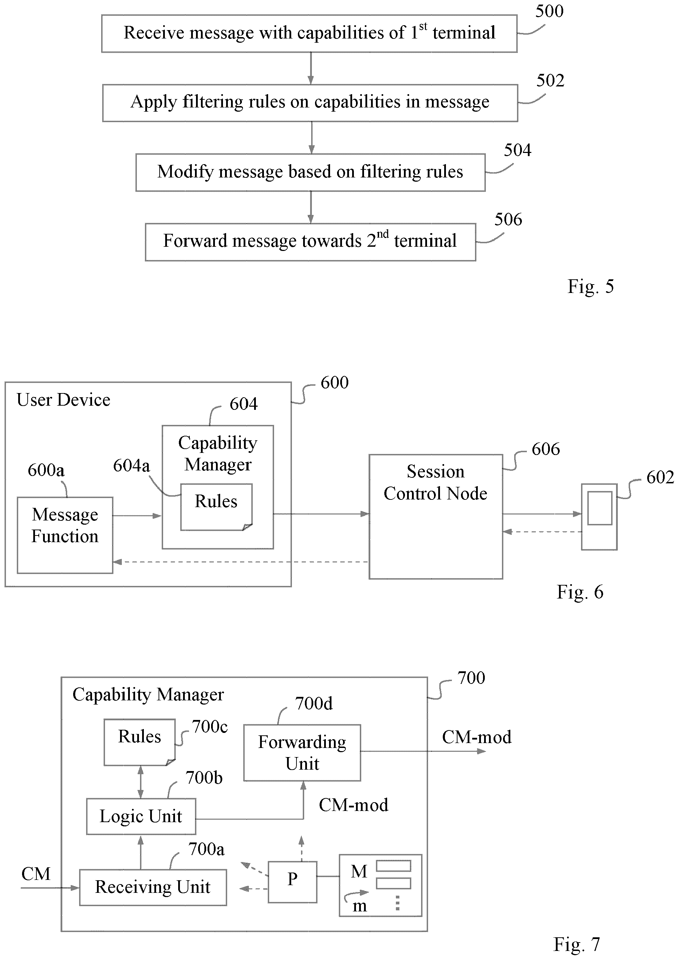

A procedure for supporting provision of capabilities of a first user terminal to a second user terminal, will now be described with reference to the flow chart in Fig. 5 comprising actions executed in a capability manager, e.g. the capability manager 304 of the above examples. A capability manager having the functions described herein may alternatively be implemented in the first user terminal, to be described in more detail later below with reference to Fig. 6. It is assumed that filtering rules have been pre-configured in the capability manager for the first user terminal to control exposure of the terminal's capabilities.

In a first **action 500,** the capability manager receives a capability message issued by the first user terminal and directed to the second user terminal, basically corresponding to actions 3:2 and 4:2 above. The received capability message comprising capabilities of the first user terminal, which message could be, without limitation, a capability request such as the SIP Options message, or a response to a capability request from another terminal such as the 200 OK. The capability manager then applies the previously pre-configured filtering rules on the capabilities in the capability message, in a next **action 502,** basically corresponding to actions 3:3 and 4:3 above.

In a further **action 504,** the capability manager modifies the received capability message by omitting at least one of the capabilities therein, based on the filtering rules. The capability manager then forwards the modified capability message towards the second user terminal, in a final shown **action 506,** basically corresponding to actions 3:4 and 4:4 above.

As mentioned above, Fig. 6 illustrates a variant where a capability manager 604 is implemented in a user device 600 instead of in a communication services network. The user device 600 is also schematically shown to comprise a "message function" 600a that handles capability messages including capability requests and responses to and from other user terminals, respectively. The capability manager 604 can be configured to basically operate in the same manner as the network-implemented capability manager 304 in the above examples, i.e. to apply pre-configured filtering rules 604a and omit at least one capability in any capability messages issued from the message function 600a and sent to another user terminal 602 over a session control node 606, as shown by full arrows. The above functions have been described above, e.g. in connection with Figs 3-5, which is thus not necessary to repeat here. Any capability messages coming from the opposite terminal 602 can go directly to the message function 600a, as shown by dashed arrows.

A detailed but non-limiting example of how a capability manager can be configured to accomplish the above-described solution, is illustrated by the block diagram in Fig. 7. The capability manager 700 is configured to support provision of capabilities of a first user terminal to a second user terminal, not specifically shown here, e.g. according to the procedures described above for any of Figs 3 - 6, respectively. The capability manager 700 will now be described in terms of a possible example of employing the solution. It is assumed that filtering rules 700c have been pre-configured in the capability manager 700 for the first user terminal to control exposure of the terminal's capabilities in any opposite user terminal.

The capability manager 700 comprises a **receiving unit 700a** adapted to receive a capability message "CM" issued by the first user terminal and directed to the second user terminal. The capability message comprises capabilities of the first user terminal. As shown in the above examples, the capability message CM may be received from a session control node in a communication services network or from a local message function within the first terminal.

The capability manager 700 also comprises a **logic unit 700b** adapted to apply the filtering rules 700c on the capabilities in the capability message CM. The logic unit 700b is further adapted to modify the received capability message by omitting at least one of the capabilities therein based on the filtering rules 700c. The capability manager 700 also comprises a **forwarding unit 700d** adapted to forward the modified message "CM-mod" towards the second user terminal.

It should be noted that Fig. 7 illustrates various functional units in the capability manager 700 and the skilled person is able to implement these functional units in practice using suitable software and hardware. Thus, the solution is generally not limited to the shown structures of the capability manager 700, and the functional units 700a-d may be configured to operate according to any of the features described in this disclosure, where appropriate.

The functional units 700a-d described above can be implemented in the capability manager 700 by means of program modules of a respective computer program comprising code means which, when run by a processor "P" causes the capability manager 700 to perform the above-described actions and procedures. The processor P may comprise a single Central Processing Unit (CPU), or could comprise two or more processing units. For example, the processor P may include a general purpose microprocessor, an instruction set processor and/or related chips sets and/or a special purpose microprocessor such as an Application Specific Integrated Circuit (ASIC). The processor P may also comprise a storage for caching purposes.

Each computer program may be carried by a computer program product in the capability manager 700 in the form of a memory "M" having a computer readable medium and being connected to the processor P. The computer program product or memory M thus comprises a computer readable medium on which the computer program is stored e.g. in the form of computer program modules "m". For example, the memory M may be a flash memory, a Random-Access Memory (RAM), a Read-Only Memory (ROM) or an Electrically Erasable Programmable ROM (EEPROM), and the program modules m could in alternative embodiments be distributed on different computer program products in the form of memories within the capability manager 700.

While the solution has been described with reference to specific exemplary embodiments, the description is generally only intended to illustrate the inventive concept and should not be taken as limiting the scope of the solution. For example, the terms "capability manager", "user device", "capabilities", "capability message", "session control node" and "filtering rules" have been used throughout this description, although any other corresponding nodes, functions, and/or parameters could also be used having the features and characteristics described here. The solution is defined by the appended claims.

## Claims

1. A method in a capability manager (304, 604) for supporting provision of capabilities of a first user terminal (300, 600) to a second user terminal (302, 602), the method comprising:
- receiving (500) a capability message issued by the first user terminal and directed to the second user terminal, said received capability message comprising capabilities of the first user terminal,
- applying (502) filtering rules (304a, 604a) on the capabilities in the capability message, wherein the filtering rules have been pre-configured for the first user terminal to control exposure of said capabilities,
- modifying (504) said capability message by omitting at least one of the capabilities based on the filtering rules, and
- forwarding (506) the modified capability message towards the second user terminal.

2. A method according to claim 1, wherein said capability message is a capability request to the second user terminal or a response to a capability request received from the second user terminal.

3. A method according to claim 2, wherein the capability request is a SIP Options message or the response is a 200 OK message.

4. A method according to any of claims 1-3, wherein the filtering rules pertain to at least one of: identity of a user of the second user terminal, identity of the first user terminal, current status or activity of the first user terminal and its user, current geographical location of the first user terminal, time or day, and type of service.

5. A method according to any of claims 1-4, wherein the capability manager is implemented in a communication services network (310).

6. A method according to claim 5, wherein the filtering rules are configurable by any of: a client in the first user terminal, a downloadable application, and an interactive web interface.

7. A method according to claim 5 or 6, wherein the capability manager is connected to a session control node which handles communication between the first and second user devices in the communication services network.

8. A method according to any of claims 1-4, wherein the capability manager is implemented in the first user terminal.

9. A method according to any of claims 1-8, wherein the filtering rules are employed by means of an existing function of Presence Authorization Rules or Mobile Multimedia Telephony, MMTel, service.

10. A capability manager (700) configured to support provision of capabilities of a first user terminal to a second user terminal, comprising:
- a receiving unit (700a) adapted to receive a capability message (CM) issued by the first user terminal and directed to the second user terminal, said received capability message comprising capabilities of the first user terminal,
- a logic unit (700b) adapted to apply filtering rules (700c) on the capabilities in the capability message, wherein the filtering rules have been pre-configured for the first user terminal, and further adapted to modify said capability message by omitting at least one of the capabilities based on the filtering rules, and
- a forwarding unit (700d) adapted to forward the modified message (CM-mod) towards the second user terminal.

11. A capability manager according to claim 10, wherein said capability message is a capability request to the second user terminal or a response to a capability request received from the second user terminal.

12. A capability manager according to claim 11, wherein the capability request is a SIP Options message or the response is a 200 OK message.

13. A capability manager according to any of claims 10-12, wherein the filtering rules pertain to at least one of: identity of a user of the second user terminal, identity of the first user terminal, current status or activity of the first user terminal and its user, current geographical location of the first user terminal, time or day, and type of service.

14. A capability manager according to any of claims 10-13, wherein the capability manager is adapted to be implemented in a communication services network (310).

15. A capability manager according to claim 14, wherein the filtering rules are configurable by any of: a client in the first user terminal, a downloadable application, and an interactive web interface.

16. A capability manager according to claim 14 or 15, wherein the capability manager is connectable to a session control node which handles communication between the first and second user devices in the communication services network.

17. A capability manager according to any of claims 10-13, wherein the capability manager is adapted to be implemented in the first user terminal.
